Europäisches Patentamt

European Patent Office

Office européen des brevets

(19)

(11) Veröffentlichungsnummer: **0 351 623**
**A2**

(12)

# EUROPÄISCHE PATENTANMELDUNG

(21) Anmeldenummer: **89112100.6**

(22) Anmeldetag: **03.07.89**

(51) Int. Cl.⁴: **F16H 25/22**

(30) Priorität: **19.07.88 DE 8809239 U**

(43) Veröffentlichungstag der Anmeldung:
**24.01.90 Patentblatt 90/04**

(84) Benannte Vertragsstaaten:
**CH DE FR GB IT LI**

(71) Anmelder: **Isert, Hugo**
**Im Leibolzgraben 16**
**D-6419 Eiterfeld(DE)**

(72) Erfinder: **Isert, Hugo**
**Im Leibolzgraben 16**
**D-6419 Eiterfeld(DE)**

(74) Vertreter: **Olbricht, Karl Heinrich, Dipl.-Phys.**
**Am Weinberg 15**
**D-3556 Niederweimar(DE)**

(54) **Kugelgewindetrieb.**

(57) Die Erfindung betrifft einen Kugelgewindetrieb (10) mit einer auf einer Gewindespindel (12) schraubenden Mutter (20), die zumindest einen Satz Kugeln (18) führt. Sie ist bevorzugt als länglicher, kantiger Block mit Klemmbacken (26, 28) ausgebildet, die ein Umlenkstück (30) haltern. Dieses hat an einer Innenfläche (32) S-förmig gebogene Übergangsnuten (34) zum Rücklenken von in der Mutter umlaufenden Kugeln um jeweils einen Gewindegang der Spindel (12). Entlang der Achse des Gewindelochs (22) der Mutter ist einseitig eine radiale Ausnehmung (24) vorhanden, die dem Umlenkstück (30) formangepaßt ist, das in dem Spalt oder Schlitz zwischen den Backen (26, 28) im Klemmsitz gehalten ist. Die Mutter (20) kann mit einer Druckschraube (36) versehen sein, um die eventuell vorgespannten Backen (26, 28) zur Einstellung der lichten Weite (w) dazwischen auseinanderzudrücken. Die Mutter (20) kann ferner Befestigungsmittel für Träger, Mitnahme-Einrichtungen usw. aufweisen.

Fig. 1

# Kugelgewindetrieb

Die Erfindung bezieht sich auf einen Kugelgewindetrieb gemäß dem Oberbegriff von Anspruch 1.

Solche Kugelgewindetriebe sind seit langem bekannt. Durch ein Umlenkteil werden Kugeln, die in Nuten zwischen einer Gewindespindel und einer Mutter umlaufen, jeweils um einen Gewindegang oder mehrere Gewindegänge zurückgeführt. Bei hohen Steigungen und/oder mehrgängigem Gewinde sind externe Umlenkrohre üblich. Gemäß DE-U-8 108 413 wird ein Umlenkstück ohne Boden verwendet, dessen Führungsstege käfigartig durch Stäbe oder Brücken verbunden sind. Bei einer in DE-C-2 355 844 beschriebenen Konstruktion durchsetzt das bzw. jedes Umlenkstück die Mutter; es ist radiale durch Vorsprünge gesichert, die den Schraubennuten formangepaßt sind.

Bei derartigen Kugelgewindetrieben treten Probleme hinsichtlich Paßgenauigkeit und Lagesicherung auf. Damit der Kugelumlauf nicht beeinträchtigt wird, sollten keine Stufen und Lücken vorhanden sein. Das ist jedoch infolge unvermeidlicher Toleranzen bei Fertigung und Montage kaum möglich, zumal die Umlenkstücke auch ausbaubar sein müssen, wenn bei eingetretenem Verschleiß ein Ersatzstück einzusetzen ist. Die exakte Passung ist auch in bezug auf die Winkelstellung zur Gewindespindel nicht ohne weiteres gegeben, so daß unter Umständen aufwendige Justiermaßnahmen erforderlich werden.

Hauptaufgabe der Erfindung ist es, unter Vermeidung dieser und weiterer Nachteile des Standes der Technik einen verbesserten Kugelgewindetrieb von besonders einfachem Aufbau und bequem einstellbarer Leichtgängigkeit zu schaffen. Das Umlenkstück soll schnell und genau montierbar sein; ferner soll die Halterung mit kleinstmöglichem Aufwand zuverlässig gewährleistet werden. Darüber hinaus strebt die Erfindung an, die Mutter so auszubilden, daß sie als Konstruktionselement weitere Funktionen übernehmen kann.

Der Grundgedanke der Erfindung ist im kennzeichnenden Teil von Anspruch 1 angegeben. Ausgestaltungen sind Gegenstand der Ansprüche 2 bis 12.

Indem die Mutter als Zwinge ausgebildet ist, deren Backen das Umlenkstück zwischen sich haltern, ist die exakte Einstellbarkeit und Lagefixierung des Umlenkstücks in überraschender Weise vereinfacht und erheblich verbessert. Die Spindelmutter bildet eine Art Spannklammer, welche das Umlenkstück zwischen ihren Backen oder Schenkeln positionsgenau, aber leicht austauschbar hält. Das gewünschte minimale Bewegungsspiel des Kugelgewindetriebs läßt sich ebenso einfach wie dauerhaft einstellen. Auch Montage und Wartung sind dadurch außerordentlich erleichtert.

Die konstruktive Gestaltung gemäß den Ansprüchen 2 bis 5 bietet weitere Vorteile. Danach hat die Spindelmutter mit ihrer einen, an das Gewindeloch einseitig anschließenden Radialausnehmung einen allgemein U-förmigen Körper, der quer zur Axialrichtung länglich ist. Dieser kann z.B. in Gestalt eines einstückigen Quader-Klotzes überaus einfach gefertigt werden. Herkömmmlich wurde hingegen die Mutter als eigenes Bauteil in einen Halteblock eingesetzt, was zusätzliche Befestigungsmittel erforderte. Die Radialausnehmung der neue Mutter-Gestaltung bildet einen Parallelschlitz, in den auf einfachste Weise von innen ein blockförmiges Umlenkstück einpaßbar ist. Ein solches genügt nach der Erfindung auch für Gewindetriebe mit mehreren Kugelumläufen.

Eine wichtige Maßnahme der Erfindung, für die selbständiger Schutz beansprucht wird, sieht gemäß Anspruch 6 vor, daß die lichte Weite der Backen durch nur eine Spannschraube veränderbar ist. Die Mittel laut Anspruch 7 und 8 erlauben es dabei auf bequeme Weise, das Umlenkstück schnell und in definierter Lage mit einstellbarer Preßkraft zu haltern. Wesentlich ist die überaus feinfühlige Einstellbarkeit allein mittels der Spannschraube. Damit kann minimales Bewegungsspiel auf einfachste Weise hergestellt und zugleich die gewünschte Leichtgängigkeit sichergestellt werden.

Nach Anspruch 9 kann man die Backen der Mutter mit solcher Vorspannung versehen, daß sie das Umlenkstück zwischen sich klemmen, was zur zusätzlichen Sicherung bei größeren Beanspruchungen beitragen kann.

Die Mutter kann laut Anspruch 10 zur Befestigung von Aufsatz-oder Mitnahmeteilen eingerichtet und insbesondere nach Anspruch 11 nahe den Körper-Enden mit Schraublöchern versehen sein. Auf diese Weise eignet sich die Mutter als Tragteil für Bauelemente, die mittels des Kugelgewindetriebes linear verschoben werden sollen, z.B. Platten, Schlitten o.dgl.

Durch die Erfindung wird allgemein eine zur Achse des Spindelgewindelochs parallele Justierung reproduzierbar gewährleistet. Für Sonderfälle ist es auch möglich, nach Anspruch 12 zusätzlich eine Justierschraube, ein Stellstück o.dgl. vorzusehen, um eine für die Leichtgängigkeit des Kugelgewindetriebes erforderliche optimale Lagefixierung oder Nachstellbarkeit zu erzielen.

Weitere Merkmale, Einzelheiten und Vorteile der Erfindung ergeben sich aus dem Wortlaut der Ansprüche sowie aus der folgenden Beschreibung eines Ausführungsbeispiels anhand der Zeichnung.

Darin zeigen:

Fig. 1 eine Schrägansicht eines erfindungsgemäßen Kugelgewindetriebes,

Fig. 2 eine Schrägansicht eines Umlenkstücks,

Fig. 3 eine Schrägansicht einer Kugelsatzes und

Fig. 4 in auseinandergezogener Schrägansicht die vorgenannten, in der Ansicht von Fig. 1 auf einer Gewindespindel montierten Bauteile.

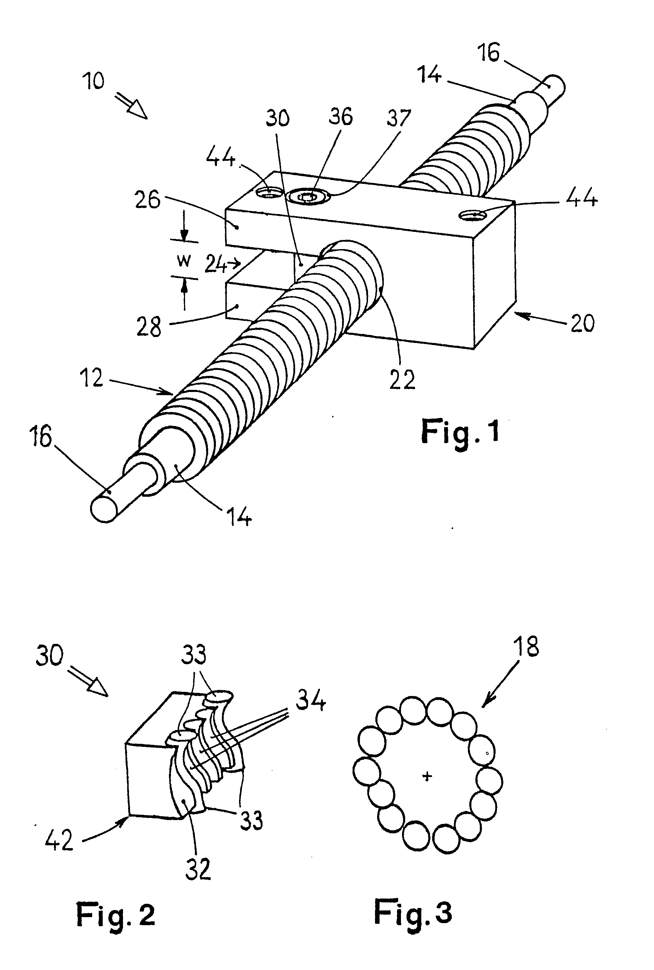

Der in Fig. 1 zusammengebaut veranschaulichte Kugelgewindetrieb ist insgesamt mit 10 bezeichnet. Er hat eine Gewindespindel 12 mit zylindrischen Abschnitten 14 sowie Zapfen 16 an den Enden, die zur Lagerung bzw. zum Auslauf dienen.

Ein in Fig. 3 veranschaulichter Kugelsatz 18 bildet eine Zwischenlage zwischen der Spindel 12 und einer Mutter 20 (Fig. 1), die als klotzförmige Zwinge gestaltet ist. Axial ist sie von einem Spindelgewindeloch 22 durchsetzt, von dem einseitig eine Radialausnehmung 24 ausgeht. Diese nimmt den Raum zwischen zwei Backen 26, 28 ein. Die Kontur des Spindelgewindelochs 22 wird durch ein Umlenkstück 30 vervollständigt, das zwischen den Backen 26, 28 klemmend gehaltert ist.

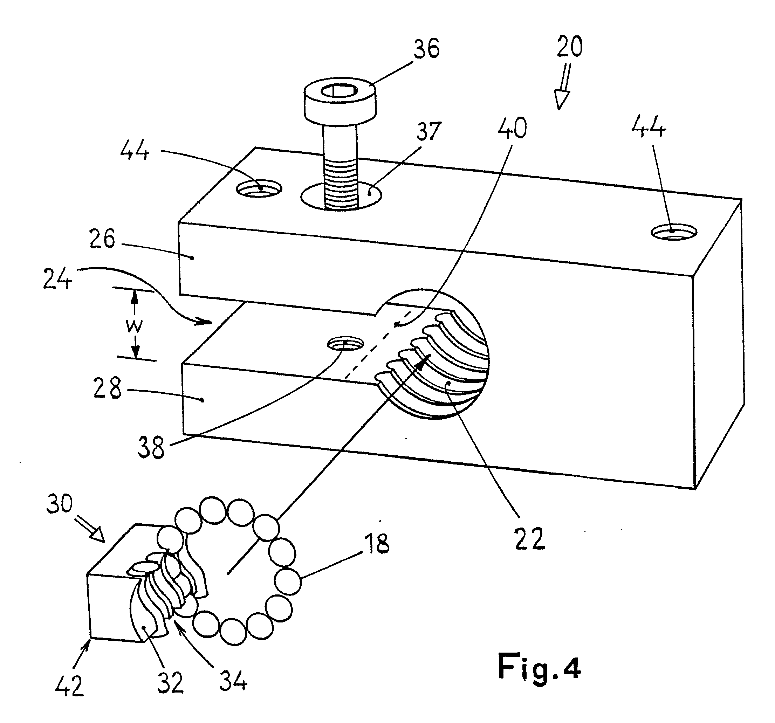

Fig. 2 zeigt das Umlenkstück 30 für sich. Es hat allgemein die Form eines kleinen kantigen Blockes mit einer konkaven Innenfläche 32, welche - im Querschnitt bzw. von der Seite gesehen, vergl. Fig. 4 - die Kontur des Spindelgewindelochs 22 fortsetzt. Nach oben und unten vorstehende Nasen 33 ragen im montierten Zustand in die benachbarten Nuten des Gewindelochs 22 und stützen so das Umlenkstück 30 daran paßgenau ab. Die Innenfläche 32 hat S-förmig gekrümmte Nutübergänge 34, um die Kugeln 18 jeweils um einen Gewindegang zurückzuführen.

Die Montage ist am besten aus Fig. 4 ersichtlich. Das Umlenkstück 30 wird in das Spindelgewindeloch 22 eingelegt und sodann die Gewindespindel 12 unter Zwischenlage des Kugelsatz 18 eingeschraubt. Sind die Backen 26, 28 zueinander vorgespannt, so wird man sie - z.B. mittels einer in ein Gewindeloch 44 eingeführten (nicht gezeichneten) Druckschraube - spreizen, bis die lichte Weite w der Radialausnehmung 24 zum Einschieben des Umlenkstücks 30 ausreicht. Wenn die Mutter 20 jedoch so ausgebildet ist, daß die Höhe des Umlenkstücks 30 der lichten Weite w nahezu entspricht, läßt es sich ohne solchen Spreizvorgang einschieben.

Die Festlegung erfolgt mittels einer Spannschraube 36, die beispielsweise einen Zylinderkopf mit Innensechskant haben kann und in ein oben versenktes Durchgangsloch 37 der einen Backe 26 gleitend eingesetzt wird. Die Verschraubung erfolgt mit einem Gewindeloch 38 in der anderen Backe 28, so daß das Umlenkstück 30 im Zwingenbereich der Mutter 20 sicher gehalten wird. Seine achsparallele Außenkante 42 verläuft dann entlang einer Kantenlinie 40, die an der Innenfläche zumindest einer Backe (z.B. 28) gedacht oder vorgesehen sein kann. Zusätzlich ist es möglich, mit einer (nicht dargestellten) Justierschraube, einem Stellstück o.dgl. eine Justierung relativ zur Achse des Gewindelochs 22 vorzunehmen.

Wesentliche Vorteile der Erfindung beruhen darauf, daß die Mutter 20 als einziges Stück, nämlich als rechteckiger oder quaderförmiger Zwingenklotz sehr kostengünstig gefertigt werden kann. Zusätzlich können Schraublöcher 44 insbesondere nahe den Enden des Mutter-Körpers zur Befestigung von (nicht gezeichneten) Trägern, Schlitten o.dgl. dienen. Die Halterung des Umlenkstücks 30 erfolgt schnell und überaus genau. Eine einzige Spannschraube 36 genügt zur feinfühligen Einstellung von minimalem Bewegungsspiel und sorgt außerdem für Klemmsicherung und Lagefixierung. Die Spannschraube 36 kann gegebenenfalls noch gesichert werden, z.B. stoffschlüsig mit einem Lack bzw. Kleber oder Zement vom Loctite-Typ.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein.

Legende PA 538 EP

w lichte Weite
10 Kugelgewindetrieb
12 Gewindespindel
14 zylindrische Abschnitte
16 Zapfen
18 Kugelsatz
20 Mutter / Zwinge(nklotz)
22 Spindelgewindeloch
24 Radialausnehmung

26 eine } Backe
28 andere

30 Umlenkstück
32 Innerfläche
33 Nasen
34 Nutübergänge
36 Spannschraube
37 Durchgangsloch
38 Gewindeloch
40 Kantenlinie
42 Außenkante
44 Schraublöcher

**Ansprüche**

1. Kugelgewindetrieb (10) mit einer Gewindespindel (12) und einer unter Zwischenlage wenigstens eines Kugelsatzes (18) auf ihr schraubenden Mutter (20), die in einer Ausnehmung (24) ein zugeordnetes Umlenkstück (30) aufnimmt, das eine Innenfläche (32) mit S-förmig gekrümmten Nutübergängen (34) zur Rückführung der im Mutter-Inneren umlaufenden Kugeln insbesondere um je einen Gewindegang des Spindelgewindes hat und sich in benachbarten Mutter-Nuten mit Nasen (33) anlegt, dadurch **gekennzeichnet,** daß die Mutter (20) als Zwinge ausgebildet ist, zwischen deren spannbaren Backen (26, 28) das Umlenkstück (30) gehaltert ist.

2. Kugelgewindetrieb nach Anspruch 1, dadurch **gekennzeichnet,** daß die Mutter (20) neben einem sie axial durchsetzenden Spindelgewindeloch (22) einseitig eine Radialausnehmung (24) aufweist, an die das Umlenkstück (30) neben dem Spindelgewindeloch (22) formangepaßt ist.

3. Kugelgewindetrieb nach Anspruch 1 oder 2, dadurch **gekennzeichnet,** daß die Innenfläche (32) des Umlenkstücks (30) konkav ist und die Kontur des Spindelgewindelochs (22) - im Querschnitt bzw. von der Seite gesehen - so fortsetzt, daß die Nutübergänge (34) jeweils beiderends mit den benachbarten Gewindemuttern fluchten.

4. Kugelgewindetrieb nach Anspruch 2 oder 3, dadurch **gekennzeichnet,** daß die Radialausnehmung (24) als an das Spindelgewindeloch (22) anschließender Schlitz und das Umlenkstück (30) als in diesen passendes Blöckchen ausgebildet ist.

5. Kugelgewindetrieb nach einem der Ansprüche 1 bis 4, dadurch **gekennzeichnet,** daß die Mutter (20) ein quer zur Axialrichtung allgemein länglicher Körper, insbesondere ein quaderförmiger Klotz ist.

6. Kugelgewindetrieb insbesondere nach einem der Ansprüche 1 bis 5, dadurch **gekennzeichnet,** daß die lichte Weite (w) der Backen (26, 28) der Mutter (20) durch eine Spannschraube (36) veränderbar ist.

7. Kugelgewindetrieb nach Anspruch 6, dadurch **gekennzeichnet,** daß die Spannschraube (36) eine Backe (26) gleitend durchsetzt und mit einem Gewindeloch (38) der anderen Backe (28) schraubt.

8. Kugelgewindetrieb nach Anspruch 6 oder 7, dadurch **gekennzeichnet,** daß die Spannschraube (36) sich radial außerhalb der Außenkanten (42) des Umlenkstücks (30) befindet, namentlich außerhalb einer zur Achse des Spindelgewindelochs (22) parallelen Kantenlinie (40), die an zumindest einer Backe (z.B. 28) gedacht oder vorgesehen ist.

9. Kugelgewindetrieb nach wenigstens einem der Ansprüche 1 bis 8, dadurch **gekennzeichnet,** daß die Backen (26, 28) der Mutter (20) vorgespannt und z.B. mittels einer Druckschraube spreizbar sind.

10. Kugelgewindetrieb nach wenigstens einem der Ansprüche 1 bis 9, dadurch **gekennzeichnet,** daß die Mutter (20) zur Befestigung von Aufsatz- oder Mitnahmeteilen eingerichtet ist.

11. Kugelgewindetrieb insbesondere nach Anspruch 5 und 10, dadurch **gekennzeichnet,** daß die Mutter (20) mit Schraublöchern (44) versehen ist, vor allem nahe den Körper-Enden.

12. Kugelgewindetrieb nach wenigstens einem der Ansprüche 1 bis 11, dadurch **gekennzeichnet,** daß das Umlenkstück (30) mittels einer Justierschraube. eines Stellstücks o.dgl. justierbar ist, namentlich relativ zur Achse des Spindelgewindelochs (22).

Fig.1

Fig. 2

Fig.3

Fig.4